# EUROPEAN PATENT APPLICATION

(11) **EP 4 546 453 A1**
(43) Date of publication of application: **30.04.2025**
(21) Application number: 22948589.1
(22) Date of filing: 30.06.2022
(51) Int. Cl.: H01M 4/36, H01M 4/38

(54) **ELECTROCHEMICAL DEVICE AND ELECTRONIC DEVICE COMPRISING SAME**

(71) Applicant: Ningde Amperex Technology Limited, Ningde, Fujian 352100 (CN)
(72) Inventor: ZHOU, Juan, Ningde, Fujian 352100 (CN); YUAN, Guoxia, Ningde, Fujian 352100 (CN); LANG, Ye, Ningde, Fujian 352100 (CN); XU, Leimin, Ningde, Fujian 352100 (CN)
(74) Representative: Icosa
(86) International application number: PCT/CN2022/103048
(87) International publication number: WO 2024/000486

(57) **Abstract**

This application relates to an electrochemical device, including a positive electrode plate, a negative electrode plate, and an electrolyte. The negative electrode plate includes a negative electrode active layer, the positive electrode plate includes a positive electrode active layer, the positive electrode active layer includes a positive electrode active material, the positive electrode active layer includes element aluminum, an amount A (mmol) of the element aluminum in the positive electrode active layer and a total area B (m²) of the negative electrode active layer satisfy 3≤A/B≤25, and the positive electrode active material includes lithium manganese oxide and a manganese-containing compound.

## Description

### TECHNICAL FIELD

This application relates to the field of energy storage, and in particular, to an electrochemical device and an electronic device including such electrochemical device.

### BACKGROUND

The electrochemical devices such as the lithium-ion batteries gain increasing market share year by year due to advantages such as light weight and high energy density. With the rapid development of new energy vehicles and the energy storage field, it is demanded that the positive electrode active material such as lithium manganese oxide has a higher charge-discharge capacity, and the electrochemical device has better cycling performance and storage performance.

### SUMMARY

According to an aspect of this application, this application relates to an electrochemical device, including a positive electrode plate, a negative electrode plate, and an electrolyte. The negative electrode plate includes a negative electrode active layer, the positive electrode plate includes a positive electrode active layer, the positive electrode active layer includes a positive electrode active material, the positive electrode active layer includes element aluminum, an amount A (mmol) of the element aluminum in the positive electrode active layer and a total area B (m²) of the negative electrode active layer satisfy 3≤A/B≤25, and the positive electrode active material includes lithium manganese oxide and a manganese-containing compound. The element aluminum can stabilize a crystal structure and improve the stability of crystal cells when lithium ions intercalate or deintercalate, allowing for a more stable structure of the positive electrode active material and improving the cycling performance of the electrochemical device. The manganese-containing compound has a low voltage platform and can replenish lithium ions of the lithium manganese oxide consumed for forming a CEI film during the initial charge, providing a diffusion pathway for the lithium ions and facilitating quick intercalation and deintercalation of lithium ions. During cycling and storage, the manganese-containing compound also helps lithium ions to slowly intercalate back, increasing the charge-discharge capacity of the positive electrode active material. When the amount A (mmol) of the element aluminum in the positive electrode active layer and the total area B (m²) of the negative electrode active layer satisfy the above relation, the lithium manganese oxide and the manganese-containing compound form a more stable structure, exerting a synergistic effect, and significantly improving the cycling performance and high-temperature storage performance of the electrochemical device.

In some embodiments, the amount A (mmol) of the element aluminum in the positive electrode active layer and the total area B (m²) of the negative electrode active layer satisfy 8≤A/B≤23.

In some embodiments, based on a mass of the positive electrode active material, a mass percentage of the manganese-containing compound is 3% to 20%.

In some embodiments, A is in a range of 0.005 to 0.04.

In some embodiments, A is in a range of 0.01 to 0.035.

In some embodiments, an average particle size of the lithium manganese oxide is C µm, and an average particle size of the manganese-containing compound is D µm, satisfying 1≤D/C≤15.

In some embodiments, the manganese-containing compound satisfies at least one of the following conditions: (1) Dᵥ50 of the manganese-containing compound is 5 µm to 40 µm; and (2) a surface of the manganese-containing compound has steps with a width of 1 nm to 1000 nm.

In some embodiments, a tap density of the positive electrode active material is 1.5 g/cm³ to 2.5 g/cm³.

In some embodiments, the positive electrode active layer further includes at least one of elements Nb, Mg, Ti, Ce, W, Ga, Zr, W, Y, V, Na, Sr, Mo, Cr, Sn, or La.

In some embodiments, based on a mass of the positive electrode active layer, a mass percentage M of the element Nb, Mg, Ti, Ce, W, Ga, Zr, W, Y, V, Na, Sr, Mo, Cr, Sn, or La is 0.01% to 3.5%.

In some embodiments, the negative electrode active layer includes a negative electrode active material, the negative electrode active material includes graphite, and d(002) of the graphite is 3.363±0.004 Å.

In some embodiments, at least one of the following conditions is satisfied: (1) an OI value of the graphite is 4±1; (2) a porosity of the negative electrode active layer is 25±5%; and (3) a compacted density of the negative electrode plate is 1.3 g/cm³ to 1.8 g/cm³.

In some embodiments, a compacted density of the positive electrode plate is 2.2 g/cm³ to 2.8 g/cm³.

According to another aspect of this application, this application relates to an electronic device including the electrochemical device according to any of the foregoing embodiments.

In this application, the positive electrode active layer includes element aluminum, an amount A (mmol) of the element aluminum in the positive electrode active layer and a total area B (m²) of the negative electrode active layer satisfy 3≤A/B≤25, and the positive electrode active material includes lithium manganese oxide and a manganese-containing compound. The element aluminum allows for a more stable structure of the positive electrode active material and the manganese-containing compound can replenish lithium ions of the lithium manganese oxide consumed for forming a CEI film during the initial charge, providing a diffusion pathway for the lithium ions and increasing the charge-discharge capacity of the positive electrode active material. When the amount A (mmol) of the element aluminum in the positive electrode active layer and the total area B (m²) of the negative electrode active layer satisfy the above relation, the lithium manganese oxide and the manganese-containing compound form a more stable structure, exerting a synergistic effect, and significantly improving the cycling performance and high-temperature storage performance of the electrochemical device. Therefore, the electrochemical device and the electronic device including the same in this application can both have significantly improved cycling performance and high-temperature storage performance. Therefore, the cycling performance and high-temperature storage performance of the electrochemical device are improved.

### DESCRIPTION OF DRAWINGS

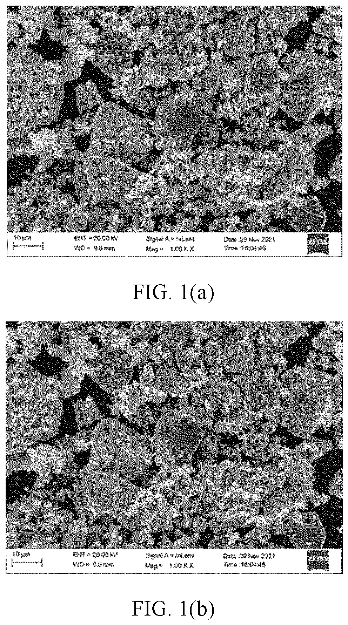

FIG. 1(a) and FIG. 1(b) are SEM images of a positive electrode active material in Example 1-1.

### DESCRIPTION OF EMBODIMENTS

The following describes this application in detail. It should be understood that the terms used in the specification and the appended claims should not be interpreted as being limited to their general and dictionary meanings, but should be interpreted based on the meanings and concepts corresponding to the technical aspects of this application, as the inventors are allowed to appropriately define the terms for the best explanation. Therefore, the descriptions shown in the implementation solutions described in the specification are merely specific examples for illustrative purposes and are not intended to show all technical aspects of this application. It should be understood that various alternative equivalents and variations can be made to them at the time of filing this application.

In specific embodiments and claims, a list of items connected by the terms "one of", "one piece of", and "one kind of" or other similar terms may mean any one of the listed items. For example, if items A and B are listed, the phrase "one of A and B" means only A or only B. In another example, if items A, B, and C are listed, the phrase "one of A, B, and C" means only A, only B, or only C. The item A may include a single element or a plurality of elements. The item B may include a single element or a plurality of elements. The item C may include a single element or a plurality of elements.

In the description of specific embodiments and claims, a list of items preceded by the terms "at least one of", "at least one piece of", "at least one kind of" or other similar terms may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (excluding C), A and C (excluding B), B and C (excluding A), or all of A, B, and C. The item A may include a single element or a plurality of elements. The item B may include a single element or a plurality of elements. The item C may include a single element or a plurality of elements.

In addition, quantities, ratios, and other values are sometimes presented in the format of range in this specification. It should be understood that such format of range is used for convenience and simplicity and should be flexibly understood as including not only values explicitly designated as falling within the range but also all individual values or sub-ranges covered by the range as if each value and sub-range are explicitly designated.

### I. Electrochemical device

According to an aspect of this application, this application relates to an electrochemical device, including a positive electrode plate, a negative electrode plate, and an electrolyte. The negative electrode plate includes a negative electrode active layer, the positive electrode plate includes a positive electrode active layer, the positive electrode active layer includes a positive electrode active material, the positive electrode active layer includes element aluminum, an amount A (mmol) of the element aluminum in the positive electrode active layer and a total area B (m²) of the negative electrode active layer satisfy 3≤A/B≤25, and the positive electrode active material includes lithium manganese oxide and a manganese-containing compound. The manganese-containing compound can replenish lithium ions of the lithium manganese oxide consumed for forming a cathode-electrolyte interface (CEI) on the positive electrode during the initial charge of the positive electrode active material, helping to improve the cycling performance and high-temperature storage performance of the electrochemical device, providing a diffusion pathway for the lithium ions, and facilitating quick intercalation and deintercalation of lithium ions. The manganese-containing compound has a low voltage platform (for example, a 3.9V platform), helping the lithium ions to slowly intercalate back during cycling and storage of the electrochemical device, thereby increasing the charge-discharge capacity of the positive electrode active material, and significantly improving the cycling performance and high-temperature storage performance of the electrochemical device. In addition, the element aluminum can improve the stability of crystal cells when lithium ions intercalate or deintercalate, allowing for a more stable crystal structure, enhancing the structural stability of the positive electrode active material, and improving the cycling performance of the electrochemical device. However, when the amount of the element aluminum is too high, the amount of lithium deintercalating is reduced, thus lowering the reversible capacity. Therefore, the amount A (mmol) of the element aluminum in the positive electrode active layer and the total area B (m²) of the negative electrode active layer restrictively satisfy 3≤A/B≤25. The manganese-containing compound can replenish lithium ions of the lithium manganese oxide consumed for forming the CEI film during the initial charge and provide a diffusion pathway for the lithium ions, increasing the charge-discharge capacity of the positive electrode active material. When the amount A (mmol) of the element aluminum in the positive electrode active layer and the total area B (m²) of the negative electrode active layer satisfy the above relation, the lithium manganese oxide and the manganese-containing compound form a more stable structure, exerting a synergistic effect, and significantly improving the cycling performance and high-temperature storage performance of the electrochemical device. In some embodiments, the amount A (mmol) of the element aluminum in the positive electrode active layer and the total area B (m²) of the negative electrode active layer satisfy 8≤A/B≤23. The element aluminum can more effectively stabilize the structure of the lithium manganese oxide and the manganese-containing compound, further improving the cycling performance and high-temperature storage performance of the electrochemical device.

In some embodiments, A is in a range of 0.005 to 0.04. The element aluminum can improve the stability of crystal cells when lithium ions intercalate or deintercalate, allowing for a more stable crystal structure, enhancing the structural stability of the positive electrode active material, and improving the cycling performance of the electrochemical device. However, when the amount of the element aluminum is too low, the improvement effect is limited; when the amount of the element aluminum is too high, the amount of lithium deintercalating is reduced, thus lowering the reversible capacity. Therefore, limiting the amount of the element aluminum in the positive electrode active layer in a range of 0.005 mmol to 0.04 mmol can further improve the cycling performance of the electrochemical device. In some embodiments, A is in a range of 0.01 to 0.035. When the amount of the element aluminum is within this range, the positive electrode active material can have a more stable crystal structure, making the electrochemical device have better cycling performance.

In some embodiments, based on a mass of the positive electrode active material, a mass percentage of the manganese-containing compound is 3% to 20%. In some embodiments, based on a mass of the positive electrode active material, a mass percentage of the manganese-containing compound is 3%, 4%, 6%, 8%, 10%, 12%, 14%, 16%, 18%, 20%, or in a range defined by any two of these values.

When the amount of the manganese-containing compound is too low, the initial charge gram capacity of the electrochemical device prepared from it is reduced. When the amount of the manganese-containing compound is too high, the initial coulombic efficiency of the electrochemical device prepared from it is reduced. This is mainly because the manganese-containing compound has a high initial charge gram capacity, which can compensate the Li⁺ consumed for forming the CEI film during the initial charge of the lithium manganese oxide. However, during the initial discharge, only part of the Li in the manganese-containing compound can intercalate back. Through research, limiting the amount of the manganese-containing compound in the foregoing range significantly improves both the initial charge gram capacity and the initial coulombic efficiency of the electrochemical device.

In some embodiments, the manganese-containing compound is of a layered structure. In some embodiments, the manganese-containing compound includes one or more of LiMn₂O₃, Li₂MnO₃, or LiNi_{0.5}Mn_{0.5}O₂.

In some embodiments, an average particle size of the lithium manganese oxide is C µm, and an average particle size of the manganese-containing compound is D µm, satisfying 1≤D/C≤15. In some embodiments, 5≤D/C≤10.

In some embodiments, the manganese-containing compound satisfies at least one of the following conditions: (1) Dᵥ50 of the manganese-containing compound is 5 µm to 40 µm; and (2) a surface of the manganese-containing compound has steps with a width of 1 nm to 1000 nm. In some embodiments, a compacted density of the positive electrode plate is 2.2 g/cm³ to 2.8 g/cm³. In some embodiments, a tap density of the positive electrode active material is 1.5 g/cm³ to 2.5 g/cm³.

Referring to FIGs. 1(a) and 1(b), the larger particles are particles of the manganese-containing compound, which is of a layered structure having steps with a width of 1 nm to 1000 nm on the surface. Adding the manganese-containing compound being of a layered structure to the positive electrode active material significantly improves the capacity, rate performance, high-temperature storage and cycling performance of the electrochemical device. This is mainly because the manganese-containing compound being of a layered structure replenishes lithium ions consumed for forming the CEI during the initial charge of the electrochemical device, helping to improve the cycling performance and storage performance of the electrochemical device, and can provide a diffusion pathway for the lithium ions, facilitating quick intercalation and deintercalation of lithium ions. The manganese-containing compound has a low voltage platform (for example, a 3.9V platform), helping the lithium ions to slowly intercalate back during cycling and storage, thereby increasing the charge-discharge capacity of the positive electrode active material.

In addition, the manganese-containing compound particles match well with the lithium manganese oxide particles, increasing the compacted density and allowing for better contact between particles. This increases pathways for active ions to diffuse, improving the cycling performance of the electrochemical device and the infiltration of the electrolyte. The smaller the average particle size of the lithium manganese oxide particles, the larger the specific surface area of the material, leading to more severe manganese dissolution, which damages the structure of the positive electrode and deteriorates the cycling performance of the electrochemical device. The smaller the particle size of the manganese-containing compound, with the same amount used, the more the active surface exposed, and the more significant the improvement in the first cycle charge capacity. Additionally, the smaller the particle size of the manganese-containing compound, the shorter the lithium ion diffusion pathway, which is more conducive to intercalation and deintercalation of the lithium ions, improving the capacity and cycling performance of the material. As D/C is limited in the foregoing range, desirable device performance can be achieved.

In some embodiments, the positive electrode active layer further includes at least one of elements Nb, Mg, Ti, Ce, W, Ga, Zr, W, Y, V, Na, Sr, Mo, Cr, Sn, or La. In some embodiments, based on a mass of the positive electrode active layer, a mass percentage M of the element Nb, Mg, Ti, Ce, W, Ga, Zr, W, Y, V, Na, Sr, Mo, Cr, Sn, or La is 0.01% to 3.5%. In some embodiments, based on the mass of the positive electrode active material, the mass percentage M is 0.01%, 0.05%, 0.1%, 0.2%, 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.5%, or in a range defined by any two of these values. When the mass percentage M is within the above range, the elements can stabilize the structure of the positive electrode active material, help diffusion of lithium ions, reduce material phase transition, inhibit the dissolution of transition metals, and improve the cycling performance and high-temperature storage performance of the electrochemical device. However, a too high amount of the element causes lattice expansion in the positive electrode active material, destabilizing the material structure and affecting the cycling performance of the electrochemical device.

In some embodiments, the negative electrode active layer includes a negative electrode active material, the negative electrode active material includes graphite, and d(002) of the graphite is 3.363±0.004 Å. Graphite that meets this condition has a good degree of graphitization. The better the graphitization, the higher the crystallinity of the graphite, the denser the internal structure, and the higher the initial coulombic efficiency of the graphite. Combination between such graphite and the foregoing positive electrode active material with a high charge capacity allows the electrochemical device to have a higher discharge capacity.

In some embodiments, the OI value of the graphite is 4±1. The smaller the OI value, the better the isotropy of the graphite, which is more conducive to improving the solid-phase diffusion of Li⁺, reducing the charge transfer resistance of the electrochemical device and improving the kinetics of the graphite, thus improving the cycling performance of the electrochemical device. In some embodiments, the OI value of the graphite is 3, 3.5, 4, 4.5, 5, 5.5, 6, 6.5, 7, 7.5, 8, 8.5, 9, 9.5, 10, 10.5, 11, 11.5, or in a range defined by any two of these values.

The graphite described in this application has a higher surface crystallinity with fewer surface defects, which is conducive to lithium ion diffusion. In addition, this graphite is of a single particle structure with better kinetics. The joint effect of these properties significantly reduces the charge transfer resistance (Rct) of the negative electrode plate.

In some embodiments, a porosity of the negative electrode active layer is 25±5%. When the porosity of the negative electrode active layer exceeds the above range, more electrolyte is consumed during the SEI formation process, thus reducing the initial coulombic efficiency of the electrochemical device. Additionally, the consumption of the electrolyte affects the cycling performance of the electrochemical device.

In some embodiments, a compacted density of the negative electrode plate is 1.3 g/cm³ to 1.8 g/cm³. With the compacted density within this range, the particles have a proper effective active area and the particle surface is undamaged, which is conducive to improving the initial coulombic efficiency of graphite and increasing the discharge capacity of the battery. Moreover, a proper compacted density facilitates better infiltration of the electrolyte, improving kinetics, thus improving the cycling performance of the electrochemical device.

According to another aspect of this application, this application relates to an electronic device including the electrochemical device according to any of the foregoing embodiments.

### II. Method for preparing the above electrochemical device

The method for preparing the electrochemical device in this application is described in detail using a lithium-ion battery as an example.

Preparation of negative electrode: A negative electrode active material, a conductive agent, a binder, and a thickener are dispersed in a solvent system in a specific mass ratio, fully stirred and mixed to uniformity, then applied to a negative electrode current collector, followed by drying and cold calendering, to obtain a negative electrode plate.

For example, the negative electrode active substance may be one or more selected from the group consisting of natural graphite, artificial graphite, mesocarbon microbeads (MCMB), hard carbon, soft carbon, silicon, silicon-carbon composite, SiO, Li-Sn alloy, Li-Sn-O alloy, Sn, SnO, SnO₂, lithium titanate Li₄Ti₅O₁₂ with a spinel structure, Li-Al alloy, and metallic lithium. The conductive agent may be one or more selected from the group consisting of graphite, superconductive carbon, acetylene black, carbon black, Ketjen black, carbon dots, carbon nanotubes, graphene, and carbon nanofibers. The binder may be one or more selected from the group consisting of styrene-butadiene rubber (SBR), polyvinylidene fluoride (PVDF), polytetrafluoroethylene (PTFE), polyvinyl butyral (PVB), water-based acrylic resin (water-basedacrylic resin), and carboxymethyl cellulose (CMC). The thickener may be carboxymethyl cellulose (CMC).

The negative electrode current collector may be made of a material such as a metal foil material or a porous metal plate, for example, a foil material or porous plate made of metal such as copper, nickel, titanium, or iron or alloys thereof, such as copper foil.

### Preparation of positive electrode:

Preparation of manganese-containing compound in positive electrode active material:
(a) Place Mn₃O₄ in a corundum crucible, heat it to 500°C at a rate of 5°C/min in an air atmosphere, and maintain the constant temperature for 1 h to obtain anhydrous Mn₃O₄.
(b) Weigh the anhydrous Mn₃O₄ and LiOH in a molar ratio of 1.05:1 for Li:Mn, mix them using a mixing device for 8 h, and add nano Al₂O₃ in a molar ratio of 0.08:1 for Al:Mn to obtain a mixture precursor.
(c) Place the mixture precursor in the corundum crucible, introduce a nitrogen gas at a rate of 2m³/h, heat the precursor to 940°C at a rate of 5°C/min, and maintain the constant temperature for 10 h, followed by natural cooling to a room temperature, to obtain a manganese-containing compound.

A positive electrode active material (lithium manganese oxide (LiMn₂O₄)), the aforementioned manganese-containing compound, conductive agent, and binder are mixed in a specific ratio, added with a solvent, and stirred to uniformity, to obtain a slurry. The slurry is evenly applied to a positive electrode current collector, an aluminum foil, and dried at 90°C, to obtain an initial positive electrode plate. The initial positive electrode plate is subjected to processes such as cold calendering and cutting to obtain a positive electrode plate.

In some embodiments, the conductive agent improves the conductivity of the positive electrode active layer by providing a conductive pathway to the active substance. The conductive agent may include at least one of the following: acetylene black, Ketjen black, natural graphite, carbon black, carbon fiber, metal powder, or metal fibers (for example, copper, nickel, aluminum, or silver), but the examples of the conductive agent are not limited thereto. In some embodiments, the amount of the conductive agent can be adjusted properly. Based on a total of 100 parts by weight of the positive electrode active substance, conductive agent, and positive electrode binder, the amount of the conductive agent ranges from 1 part by weight to 30 parts by weight.

In some embodiments, an example of the solvent includes but is not limited to N-methylpyrrolidone, acetone, or water. In some embodiments, the amount of the solvent can be adjusted properly.

In some embodiments, the binder improves the bonding performance between the positive electrode active substance particles as well as between the positive electrode active substance particles and the current collector. An example of the positive electrode binder includes but is not limited to one or more of polyvinylidene fluoride (PVDF), polytetrafluoroethylene (PTFE), polyvinyl butyral (PVB), ethylene-vinyl acetate copolymer (EVA), and polyvinyl alcohol (PVA). Based on a total of 100 parts by weight of the active substance, conductive agent, and positive electrode binder, the amount of the positive electrode binder ranges from 1 part by weight to 30 parts by weight.

In some embodiments, the current collector has a thickness in the range of 3 µm to 20 µm, but the disclosed content is not limited thereto. The current collector is conductive and does not cause adverse chemical changes in the manufactured battery. An example of the current collector includes copper, stainless steel, aluminum, nickel, titanium, or alloy (for example, copper-nickel alloy), but is not limited thereto. In some embodiments, the surface of the current collector may include fine irregularities (causing, for example, different surface roughness) to enhance the adhesion of the current collector surface to the active substance. In some embodiments, the current collector may be used in various forms, its example including film, sheet, foil, mesh, porous structure, foam, or nonwoven material, but the disclosed content is not limited thereto.

The separator in some embodiments of this application is not particularly limited. The separator includes a polyolefin microporous film and a coating (applied to the surface of the polyethylene microporous film). The separator is a single-layer or multi-layer polyolefin microporous film formed by one or more of polyethylene (PE), ethylene-propylene copolymer, polypropylene (PP), ethylene-butene copolymer, ethylene-hexene copolymer, or ethylene-methyl methacrylate copolymer. The coating includes inorganic ceramic particles, which are selected from one or more of SiO₂, Al₂O₃, CaO, TiO₂, ZnO₂, MgO, ZrO₂, or SnO₂.

According to some embodiments of this application, the electrolyte includes a non-aqueous organic solvent and lithium salt. The non-aqueous organic solvent may include carbonate, carboxylic acid ester, ether compound, sulfone compound, or other aprotic solvent. An example of a carbonate solvent includes dimethyl carbonate, diethyl carbonate, methyl ethyl carbonate, methyl propyl carbonate, ethyl propyl carbonate, dipropyl carbonate, ethylene carbonate, propylene carbonate, butylene carbonate, bis(2,2,2-trifluoroethyl) carbonate, or the like. An example of an ether compound solvent includes ethylene glycol dimethyl ether, diethylene glycol dimethyl ether, tetraethylene glycol dimethyl ether, dibutyl ether, tetrahydrofuran, 2-methyltetrahydrofuran, bis(2,2,2-trifluoroethyl) ether, 1,3-dioxane, 1,4-dioxane, or the like. An example of a sulfone compound solvent includes ethyl vinyl sulfone, methyl isopropyl sulfone, isopropyl sec-butyl sulfone, sulfolane, or the like.

According to some embodiments of this application, the non-aqueous organic solvent in the electrolyte may be a single non-aqueous organic solvent or a mixture of multiple non-aqueous organic solvents. When a mixed solvent is used, the mixing ratio can be controlled based on the desired performance of the electrochemical device.

According to some embodiments of this application, the lithium salt in the electrolyte includes or is selected from at least one of organic lithium salt or inorganic lithium salt. The lithium salt includes or is selected from lithium hexafluorophosphate (LiPF₆), lithium tetrafluoroborate (LiBF₄), lithium bis(oxalate)borate (LiB(C₂O₄)₂,LiBOB), lithium difluoro(oxalate)borate (LiBF₂(C₂O₄),LiDFOB), lithium hexafluoroantimonate (LiSbF₆), lithium hexafluoroarsenate (LiAsF₆), lithium perfluorobutylsulfonate (LiC₄F₉SO₃), lithium perchlorate (LiClO₄), lithium aluminate (LiAlO₂), lithium tetrachloroaluminate (LiAlCl₄), lithium bis(perfluorosulfonyl)imide (LiN(CₓF₂ₓ₊₁SO₂)(C_{y}F_{2y+1}SO₂), where x and y are natural numbers), lithium chloride (LiCl), and lithium fluoride (LiF).

Preparation of electrolyte: In an argon atmosphere glove box with a water amount of less than 10 ppm, ethylene carbonate (EC), propylene carbonate (PC), diethyl carbonate (DEC), ethyl propionate (EP), and propyl propionate (PP) are mixed to uniformity in a mass ratio of 1:1:1:1:1. Then, the fully dried lithium salt LiPF₆ is dissolved in the above non-aqueous solvent to obtain a base electrolyte, where a mass percentage of LiPF₆ is 12.5%.

The positive electrode, the separator, and the negative electrode are stacked in order, with the separator sandwiched between the positive and negative electrodes for separation, and wound to obtain a jelly roll. The jelly roll obtained by winding is placed in an outer package, which, with an electrolyte injected therein, is then sealed, followed by processes such as formation, degassing, and trimming, to obtain a lithium-ion battery.

### III. Electronic device

This application provides an electronic device, including the electrochemical device as described above.

According to some embodiments of this application, the electronic device includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, or a large household battery.

### IV. Specific examples

The following further describes this application in detail using a lithium-ion battery as an example. However, it should be understood that the following examples are only exemplary, and embodiments of this application are not limited thereto.

### Performance test methods

### Test method for particle morphology and particle size

Particle morphology: A scanning electron microscope (JEOL JSM-6360LV) was used to capture an SEM image of a positive electrode plate obtained by disassembling a lithium-ion battery, so as to observe the particle morphology of a positive electrode active material.

Measurement for average particle size of particles: The scanning electron microscope was used to capture the SEM images of the positive electrode plate obtained by disassembling the lithium-ion battery, so as to observe the particles of the positive electrode active material. Image analysis software was used to randomly select 30 particles from the SEM image and an area of each particle was calculated. Assuming the particles were spherical, the particle size D (diameter) of each particle was calculated according to the formula: D=2×(S1/π)^{1/2}, where S1 was the area of the particle. The arithmetic mean of the particle sizes of the 30 particles was then taken to obtain the average particle size of the particles.

### Test method for compacted density

A positive electrode plate (coated on both sides) was obtained by disassembling a lithium-ion battery. Small circular pieces with an area of 1540.25 mm² were cut from a region of the positive electrode plate coated with a positive electrode active layer, and their weight m₁ and thickness d₁ were measured. Small circular pieces with an area of 1540.25 mm² were also cut from a blank region of a current collector of the positive electrode plate, and their weight m₀ and thickness d₀ were measured. Compacted density=(m₁-m₀)/2/1540.25/((d₁-d₀)/2).

### Test method for element amount

A positive electrode plate was obtained by disassembling a lithium-ion battery and was cleaned with DMC. A positive electrode active layer of the cleaned positive electrode plate was scraped off with a spatula and dissolved in a mixed solvent (for example, 0.4 g of the positive electrode active layer was dissolved in a mixed solvent of 10 mL of aqua regia (a mixture of nitric acid and hydrochloric acid in a ratio of 1:1) and 2 ml of HF). The solution was diluted to 100 mL, and then an ICP (Inductively coupled plasma, inductively coupled plasma) analyzer was used to test a mass percentage of element Nb, Mg, Ti, Ce, W, Ga, Zr, W, Y, V, Na, Sr, Mo, Cr, Sn, or La in the solution.

### Test methods for crystal spacing and OI Value

X-ray diffraction analysis was performed on graphite powder.

Instrument model: Bruker D8 ADVANCE; target: Cu Kα; scanning angle: 5-80°.

### Test for capacity of lithium-ion battery: gram capacity (mAh g⁻¹) during a first charge and discharge cycle at 25°C and 0.2C

Four lithium-ion batteries prepared from the positive electrode materials shown in the examples and comparative examples were taken as a set. At a constant temperature of 25°C, the batteries were charged at a constant current of 0.5C (that is, the current value required for fully discharging the theoretical capacity in 2 h) to 4.2 V, charged at a constant voltage, and discharged at a constant current of 0.2C to 2.8 V. The initial discharge capacity at 0.2C was calculated as the capacity of the battery.

First cycle coulombic efficiency=first cycle discharge capacity/first cycle charge capacity.

### Cycling performance test for lithium-ion battery

Four lithium-ion batteries prepared from the positive electrode materials shown in the examples and comparative examples were taken as a set. The four lithium-ion batteries were repeatedly charged and discharged through the following steps, and the discharge capacity retention rates of the batteries were calculated.

First, in an environment of 25/45°C, a first charge and discharge cycle was performed. The batteries were charged at a constant current of 0.5 C to a voltage of 4.2 V, charged at a constant voltage, and discharged at a constant current of 1C to 2.8 V. The discharge capacities during the first cycle were recorded. Then, the charge and discharge cycle was repeated for 1500/400 times, and the discharge capacities at the 1000th/500th cycle were recorded.

Cycling capacity retention rate at 25°C=(discharge capacity of the 1500th cycle/discharge capacity of the 1st cycle)×100%

Cycling capacity retention rate at 45°C=(discharge capacity of the 400th cycle/discharge capacity of the 1st cycle)×100%

### High-temperature storage test of lithium-ion battery

Four lithium-ion batteries prepared from the positive electrode materials shown in the examples and comparative examples were taken as a set. In an environment of 60°C, the batteries were charged at a constant current of 0.5C to 4.2 V, charged at a constant voltage, and discharged at a constant current of 1C to 2.8 V. The discharge capacity was recorded as the pre-storage capacity. The batteries were charged at a constant current of 0.5C to 3.99 V, charged at constant voltage until the current dropped below 0.05C, and then stored in a 60°C oven for 14 D. Next, they were discharged at a constant current of 1C to 2.8 V, charged at a constant current of 0.5C and a constant voltage until the upper limit voltage reached 4.2 V, and discharged at a constant current of 1C to 2.8 V. The discharge capacity was recorded as the post-storage capacity.

High-temperature storage capacity retention rate at 60°C=post-storage capacity/pre-storage capacityx100%.

### A. Examples 1-1 to 1-5 and Comparative examples 1 and 2

### Preparation method in Example 1-1

### Positive electrode:

Step (1)-Preparation of manganese-containing compound:
(a) MnOOH was placed in a corundum crucible and heated to 500°C at a rate of 5°C/min in an air atmosphere, with the constant temperature maintained for 1 h, to obtain anhydrous Mn₃O₄.
(b) Anhydrous Mn₃O₄ and LiOH were weighed in a molar ratio of 1.05:1 for Li:Mn. Nano Al₂O₃ was added based on a molar amount of 0.014 mmol of element aluminum, and nano Cr₂O₃ was added based on a mass ratio of 0.213:1 for elements Cr:Mn. The above substances were mixed to uniformity using a sand milling device and then mixed for 8 h using a mixing device to obtain a mixture precursor.
(c) The mixture precursor was placed in the corundum crucible, with a nitrogen gas introduced at a rate of 2m³/h, heated to 940°C at a rate of 5°C/min, with the constant temperature maintained for 10 h, and naturally cooled to a room temperature, to obtain a manganese-containing compound. A surface of particles of the manganese-containing compound had steps with a width of 600 nm to 700 nm, and its Dᵥ50 was 19.3 µm.

### Step (2):

The manganese-containing compound prepared in step (1), lithium manganese oxide, conductive carbon black (Super P), carbon nanotubes (CNT), and polyvinylidene fluoride (PVDF) were mixed in a weight ratio of 90:5:1.8:1.2:2, and added with N-methylpyrrolidone (NMP) as a solvent, so as to prepare a slurry stirred evenly, with a solid content of 0.75. The slurry was then evenly applied to both surfaces of the positive electrode current collector: an aluminum foil, and dried at 90°C to obtain an initial positive electrode plate. The initial positive electrode plate was subjected to processes such as cold calendering and cutting to obtain a positive electrode plate.

Negative electrode: A negative electrode active material: graphite, conductive carbon black (Super P), and polyvinylidene fluoride (PVDF) were mixed in a weight ratio of 97:1.0:2.0 and added with N-methylpyrrolidone (NMP) as a solvent, so as to prepare a slurry stirred evenly, with a solid content of 0.8. The slurry was evenly applied to a negative electrode current collector, a copper foil, and dried at 80°C, to obtain an initial negative electrode plate. The initial negative electrode plate was subjected to processes such as cold calendering and cutting to obtain a negative electrode plate.

Electrolyte: In an argon atmosphere glove box with a water amount of less than 10 ppm, ethylene carbonate (EC), propylene carbonate (PC), diethyl carbonate (DEC), ethyl propionate (EP), and propyl propionate (PP) were mixed to uniformity in a mass ratio of 1:1:1:1:1. Then, the fully dried lithium salt LiPF₆ was dissolved in the above non-aqueous solvent to obtain a base electrolyte, where a mass percentage of LiPF₆ was 12.5%.

Separator: A PE porous polymerized film was used as a separator.

The positive electrode, the separator, and the negative electrode were stacked in order, with the separator sandwiched between the positive and negative electrodes for separation, wound, and placed in an outer package, which was then sealed after injection of the prepared electrolyte therein, followed by processes such as formation, degassing, and trimming, to obtain a lithium-ion battery.

Examples 1-2 to 1-5 differ from Example 1-1 only in the amount of the manganese-containing compound (where adjusting the amount of the manganese-containing compound is based on a total weight fraction of 95% for the manganese-containing compound and the lithium manganese oxide). Example 1-6 differs from Example 1-1 in the amount of the manganese-containing compound and graphite used in the negative electrode, where the graphite in Example 1-6 is non-high-initial-efficiency graphite (with d(0002)=3.3710 and OI value=12.3, respectively). Comparative example 1 differs from Example 1-1 in that the positive electrode active material of Comparative example 1 contains only the lithium manganese oxide without the manganese-containing compound, and the amount of the element aluminum in the positive electrode active layer in Comparative example 1 is 0.008 mmol. In Table 1, the average particle size of the manganese-containing compound is 18.9 µm, and the average particle size of the lithium manganese oxide is 2.7 µm. The amounts of the elements aluminum in the positive electrode active layers of Examples 1-1 to 1-6 and Comparative examples 1 and 2 differ. As the amount of the manganese-containing compound increases, the amount of the element aluminum in the active layer per unit area increases. For details, refer to Table 1 below, which provides differences in the composition and performance of lithium-ion batteries in Examples 1-1 to 1-5 and Comparative examples 1 and 2.

**Table 1**

| | A/B | A | First cycle discharge capacity (mAh g⁻¹) | First cycle coulombic efficiency (%) | Capacity retention rate after 1500 cycles at 25°C (%) |
|---|---|---|---|---|---|
| Example 1-1 | 9.7 | 0.014 | 116.5 | 91.5 | 75.1 |
| Example 1-2 | 8.5 | 0.013 | 115.2 | 92.1 | 72.4 |
| Example 1-3 | 17.5 | 0.027 | 117.6 | 90.3 | 77.8 |
| Example 1-4 | 23.5 | 0.036 | 118.3 | 88.4 | 77.1 |
| Example 1-5 | 3.7 | 0.006 | 113.7 | 92.4 | 70.9 |
| Example 1-6 | 10.2 | 0.015 | 116.3 | 88.2 | 74.6 |
| Comparative example 1 | 5.5 | 0.008 | 112.5 | 92.6 | 65.9 |

| | | | | | |
|---|---|---|---|---|---|
| Note: A in unit of mmol is the amount of the element aluminum in the positive electrode active layer, and B in unit of m² is the total area of the negative electrode active layer. | | | | | |

Referring to Table 1, it can be known that as compared to Comparative example 1 where the positive electrode active material includes only the lithium manganese oxide, the lithium-ion batteries, in Examples 1-1 to 1-6, whose positive electrode active materials include the lithium manganese oxide and the manganese-containing compound show significant improvement in the initial discharge gram capacity at 25°C and 0.2C and the capacity retention rate after 1500 cycles at 25°C, and still have high first cycle coulombic efficiency. The manganese-containing compound can replenish lithium ions of the lithium manganese oxide consumed for forming a cathode-electrolyte interface (CEI) on the positive electrode during the initial charge, helping to improve the cycling performance and high-temperature storage performance of the lithium-ion battery, providing a diffusion pathway for the lithium ions, and facilitating quick intercalation and deintercalation of lithium ions. The manganese-containing compound has a low voltage platform (for example, a 3.9V platform), helping the lithium ions to slowly intercalate back during cycling and storage of the lithium-ion battery, thereby increasing the charge-discharge capacity of the positive electrode active material, significantly improving the cycling performance and high-temperature storage performance of the lithium-ion battery. However, during the initial discharge, only part of the Li in the manganese-containing compound can intercalate back, affecting the coulombic efficiency of the lithium-ion battery. The element aluminum can stabilize a crystal structure and improve the stability of crystal cells when lithium ions intercalate or deintercalate, allowing for a more stable structure of the positive electrode active material and improving the cycling performance of the electrochemical device. When the amount A (mmol) of the element aluminum in the positive electrode active layer and the total area B (m²) of the negative electrode active layer satisfy 3≤A/B≤25, the lithium-ion battery can achieve better cycling performance and high-temperature storage performance.

### B. Example 1-1 and Examples 2-1 to 2-8

Examples 2-1 to 2-8 differ from Example 1-1 in only the graphite used in the negative electrodes in Examples 2-1 to 2-8. Table 2 below shows differences in the composition and performance of lithium-ion batteries between Example 1-1 and Examples 2-1 to 2-8.

**Table 2**

| | Graphitization temperature (°C) | d(002) (Å) | Graphitization degree (%) | First cycle coulombic efficiency (%) | First cycle discharge capacity (mAh g⁻¹) |
|---|---|---|---|---|---|
| Example 1-1 | 3000 | 3.3609 | 95.6 | 91.5 | 106.6 |
| Example 2-1 | 2950 | 3.3613 | 95.5 | 91.0 | 106.3 |
| Example 2-2 | 2900 | 3.3632 | 95.6 | 91.3 | 106.3 |
| Example 2-3 | 2850 | 3.3638 | 95.4 | 90.4 | 105.7 |
| Example 2-4 | 2800 | 3.3651 | 95.4 | 90.8 | 106.0 |
| Example 2-5 | 2750 | 3.3662 | 95.2 | 90.0 | 105.2 |
| Example 2-6 | 2700 | 3.3668 | 95.1 | 90.2 | 105.2 |
| Example 2-7 | 2600 | 3.3696 | 94.6 | 88.5 | 102.4 |
| Example 2-8 | 2400 | 3.3710 | 93.9 | 87.7 | 100.9 |

Referring to Table 2, it can be seen that as the graphitization temperature increases, d(002) decreases, the degree of graphitization increases, and the first cycle coulombic efficiency and the first cycle discharge capacity of the lithium-ion batteries prepared from the graphite are higher. However, a too high temperature increases the cost and limits the performance increment. Through research, when the d(002) of graphite is 3.363±0.004 Å, the graphite has a good graphitization degree, high crystallinity, dense internal structure, and high initial coulombic efficiency. When it operates with the aforementioned positive electrode active material with a high charge capacity, the lithium-ion battery has a higher discharge capacity.

### C. Example 1-1 and Examples 3-1 to 3-4

Examples 3-1 to 3-4 differ from Example 1-1 in only the OI value of the graphite.

Table 3 below shows differences in the composition and performance of lithium-ion batteries between Example 1-1 and Examples 3-1 to 3-4.

**Table 3**

| | OI | First cycle coulombic efficiency (%) | Capacity retention rate after 1500 cycles at 25°C (%) |
|---|---|---|---|
| Example 1-1 | 3.9 | 91.5 | 75.1 |
| Example 3-1 | 3.5 | 91.6 | 75.5 |
| Example 3-2 | 5.8 | 91.1 | 73.2 |
| Example 3-3 | 7.4 | 90.5 | 72.8 |
| Example 3-4 | 11.3 | 90.2 | 70.1 |

From the examples in Table 3, it can be seen that when the OI values of the graphite are between 3 and 12, the lithium-ion batteries prepared from the graphite have better cycling performance. In this case, the better isotropy of the graphite is conducive to improving the solid-phase diffusion of Li^{+,} reducing the charge transfer resistance of the lithium-ion batteries and improving the kinetics of the graphite, thus improving the cycling performance of the lithium-ion batteries.

### D. Example 1-1 and Examples 4-1 to 4-3

Examples 4-1 to 4-3 differ from Example 1-1 in the ratio (D/C) of the average particle size C (µm) of the lithium manganese oxide to the average particle size D (µm) of the manganese-containing compound, and the compacted density of the electrode plate affected by the ratio. A different D/C is mainly achieved by changing the particle sizes of the raw materials.

Table 4 below shows differences in the composition and performance of lithium-ion batteries between Example 1-1 and Examples 4-1 to 4-3.

**Table 4**

| Example | C (µm) | D (µm) | D/C | Compacted density of positive electrode plate (g/cm³) | After 1500 cycles at 25°C | High-temperature storage at 60°C |
|---|---|---|---|---|---|---|
| Example 1-1 | 2.7 | 18.9 | 7.0 | 2.39 | 76.60% | 86.60% |
| Example 4-1 | 2.5 | 22.5 | 9.0 | 2.35 | 76.30% | 86.30% |
| Example 4-2 | 2.4 | 21.9 | 9.1 | 2.50 | 77.20% | 86.50% |
| Example 4-3 | 2.4 | 22.3 | 9.3 | 2.32 | 75.80% | 86.80% |

Referring to Table 4, it can be seen that the average particle size C µm of the lithium manganese oxide and the average particle size D µm of the manganese-containing compound satisfy 1≤D/C≤15.

The manganese-containing compound particles and the lithium manganese oxide particles match each other, allowing for better contact therebetween. This can shorten the diffusion pathway for lithium ions, facilitating intercalation and deintercalation of the lithium ions, increase the capacity of the material, and also increase the compacted density of the positive electrode plate, thereby improving the cycling performance and high-temperature storage performance of the lithium-ion battery. As D/C is limited in the foregoing range, desirable device performance can be achieved.

### E. Example 1-1 and Examples 5-1 to 5-5

Examples 5-1 to 5-5 differ from Example 1-1 in only the compacted density of the negative electrode plate. Table 5 below shows differences in the composition and performance of lithium-ion batteries between Example 1-1 and Examples 5-1 to 5-5.

**Table 5**

| | Compacted density of negative electrode plate (g/cm³) | First cycle coulombic efficiency (%) | First cycle discharge gram capacity (mAh g⁻¹) | Capacity retention rate after 1500 cycles at 25°C (%) |
|---|---|---|---|---|
| Example 1-1 | 1.54 | 91.5 | 106.6 | 75.1 |
| Example 5-1 | 1.51 | 91.2 | 105.8 | 75.4 |
| Example 5-2 | 1.56 | 91.2 | 106.0 | 74.9 |
| Example 5-3 | 1.61 | 91.0 | 105.2 | 74.6 |
| Example 5-4 | 1.66 | 89.1 | 103.5 | 72.6 |
| Example 5-5 | 1.68 | 87.1 | 101.9 | 70.1 |

Referring to Table 5, it can be seen that when the compacted density of the negative electrode plate is 1.3 g/cm³ to 1.8 g/cm³, the negative electrode active particles have an appropriate, effective active area, and the particle surfaces are undamaged, allowing for higher initial coulombic efficiency of the lithium-ion battery, and increasing the discharge capacity of the lithium-ion battery. In addition, an appropriate compacted density is conducive to better infiltration of the electrolyte, improving the internal dynamics of the battery and improving the cycling performance of the lithium-ion battery.

References to "some embodiments", "some of the embodiments", "an embodiment", "another example", "examples", "specific examples", or "some examples" in this specification mean the inclusion of specific features, structures, materials, or characteristics described in the embodiment or example in at least one embodiment or example of this application. Therefore, descriptions in various places throughout this specification, such as "in some embodiments", "in the embodiments", "in an embodiment", "in another example", "in an example", "in a specific example", or "examples", do not necessarily refer to the same embodiment or example of this application. In addition, a specific feature, structure, material, or characteristic herein may be combined in any appropriate manner in one or more embodiments or examples.

Although illustrative embodiments have been demonstrated and described, persons skilled in the art should understand that the foregoing embodiments are not to be construed as limiting this application, and that some embodiments may be changed, replaced, and modified without departing from the spirit, principle, and scope of this application.

## Claims

1. An electrochemical device, comprising a positive electrode plate, a negative electrode plate, and an electrolyte, wherein,
the negative electrode plate comprises a negative electrode active layer;
the positive electrode plate comprises a positive electrode active layer;
the positive electrode active layer comprises a positive electrode active material; the positive electrode active layer comprises element aluminum;
an amount A (mmol) of the element aluminum in the positive electrode active layer and a total area B (m²) of the negative electrode active layer satisfy 3≤A/B≤25; and
the positive electrode active material comprises lithium manganese oxide and a manganese-containing compound.

2. The electrochemical device according to claim 1, wherein the electrochemical device satisfies at least one of the following;
(1) the amount A (mmol) of the element aluminum in the positive electrode active layer and the total area B (m²) of the negative electrode active layer satisfy 8≤A/B≤23;
(2) A is in a range of 0.005 to 0.04; and
(3) A is in a range of 0.01 to 0.035.

3. The electrochemical device according to claim 1, wherein an average particle size of the lithium manganese oxide is C µm, an average particle size of the manganese-containing compound is D µm, and D/C satisfies 1≤D/C≤15.

4. The electrochemical device according to claim 3, wherein D/C satisfies 5≤D/C≤10.

5. The electrochemical device according to claim 1, wherein the manganese-containing compound satisfies at least one of the following conditions:
(1) Dᵥ50 of the manganese-containing compound is 5 µm to 40 µm; and
(2) a surface of the manganese-containing compound has steps with a width of 1 nm to 1000 nm.

6. The electrochemical device according to claim 1, wherein the positive electrode active layer further comprises at least one of elements Nb, Mg, Ti, Ce, W, Ga, Zr, W, Y, V, Na, Sr, Mo, Cr, Sn, or La, and based on a mass of the positive electrode active layer, a mass percentage M of the element Nb, Mg, Ti, Ce, W, Ga, Zr, W, Y, V, Na, Sr, Mo, Cr, Sn, or La is 0.01% to 3.5%.

7. The electrochemical device according to claim 1, wherein the negative electrode active layer comprises a negative electrode active material, the negative electrode active material comprises graphite, and d(002) of the graphite is 3.363±0.004 Å.

8. The electrochemical device according to claim 7, wherein at least one of the following conditions is satisfied:
(1) an OI value of the graphite is 4±1;
(2) a porosity of the negative electrode active layer is 25±5%; and
(3) a compacted density of the negative electrode plate is 1.3 g/cm³ to 1.8 g/cm³.

9. The electrochemical device according to claim 1, wherein a compacted density of the positive electrode plate is 2.2 g/cm³ to 2.8 g/cm³.

10. An electronic device, comprising the electrochemical device according to any one of claims 1 to 9.
